# EUROPEAN PATENT SPECIFICATION

(11) **EP 3 712 115 B1**
(45) Date of publication and mention of the grant of the patent: **06.03.2024**
(21) Application number: 20164856.5
(22) Date of filing: 23.03.2020
(51) Int. Cl.: C02F 1/00, C02F 1/32, C02F 1/38, C02F 1/52, C02F 3/08, C02F 3/34, C02F 103/42, E04H 4/12

(54) **METHOD FOR OPTIMIZING THE BIOLOGICAL TREATMENT OF SWIMMING POOLS**
VERFAHREN ZUR OPTIMIERUNG DER BIOLOGISCHEN BEHANDLUNG VON SCHWIMMBÄDERN
PROCÉDÉ D'OPTIMISATION DU TRAITEMENT BIOLOGIQUE DES PISCINES

(30) Priority: 21.03.2019 BE 201905175
(43) Date of publication of application: 23.09.2020
(73) Proprietor: Aquatic Science SA, 4040 Herstal (BE)
(72) Inventor: LUIZI, Frédéric, 4910 Theux (BE); POGNOT, Jean-François, 4880 Aubel (BE); WERQUIN, Ruben, 1180 Bruxelles (BE); DURIEUX, Alain, 1083 Bruxelles (BE)
(74) Representative: Calysta NV

(56) References cited:
- EP-A1- 3 273 429
- CN-B- 104 222 076
- GB-A- 442 346
- US-A1- 2005 036 982
- Anonymous: "Gezond zwemwater", , 1 January 2018 (2018-01-01), XP055649229, Retrieved from the Internet: URL:www.poolplaza.nl/info-gezondzwemwater [retrieved on 2019-12-04]
- Lovibond: "Swimming and Spa Pool Water Treatment", , 1 January 2011 (2011-01-01), XP055649483, Retrieved from the Internet: URL:https://www.prowater.nl/Include/Electo sFileStreaming.asp?FileId=340 [retrieved on 2019-12-04]
- Anonymous: "Swimming pool sanitation - Wikipedia", , 31 January 2019 (2019-01-31), pages 1-11, XP055649468, Retrieved from the Internet: URL:https://en.wikipedia.org/w/index.php?t itle=Swimming_pool_sanitation&oldid=881142 598 [retrieved on 2019-12-04]
- Anonymous: "Biologische waterzuivering voor zwembad", , 1 January 2018 (2018-01-01), XP055649347, Retrieved from the Internet: URL:https://www.golantec.be/Biologische%20 waterzuivering.html [retrieved on 2019-12-04]
- WOJTOWICZ J A: "Water, Treatment of Swimming Pools, Spas and Hot Tubs", KIRK OTHMER ENCYCLOPEDIA OF CHEMICAL TECHNOLOGY, XX, XX, 4 December 2000 (2000-12-04), pages 1-14, XP002210378,

## Description

### FIELD OF THE INVENTION

The present disclosure relates to a method suitable for optimizing a biological treatment of pools by monitoring one or more system parameters comprising a carbonate hardness (KH), a global hardness (GH) which refers to the concentration of divalent metal ions in water, and a potential of Hydrogen (pH), wherein the pH is maintained within a range of about 6.5 to 8.5, and wherein a ratio of the KH and GH (KH/GH) is maintained within a range of about 60 % to 95 %, wherein the GH is maintained within a range of about 50 ppm to 370 ppm, and wherein the GH/ KH is maintained within the range for at least about 7 days after the startup.

### BACKGROUND

Most pool owners struggle to optimally control the quality of the water in their pools. The water is affected by environmental factors such as sunlight, wind, pollen, debris, rain and human factors such as skin bacteria, sweat and urine. Most pool owners make adjustments on a weekly basis, in order to deal with changing conditions. However, most users overdose their pools with hypochlorite salts, which results in harsh water that attacks skin, hair and bathing suits. These salts react with water to produce the strong oxidant hypochlorous acid (HCLO). This HCLO is the major bactericidal agent in chlorinated pool waters. Ammonia and ammonia-like compounds found in human sweat and urine as well as resulting from the degradation of organic matter brought to the pool by the wind, react with HCLO, producing chloramines. These compounds can cause wheeziness and sore eyes for swimmers. Moreover, these powerful oxidants can damage epithelial barriers of the respiratory tracts of the bathers. To young children, such damage to the epithelium can increase sensitivity to allergy. Moreover, the chlorine derivatives can cross the scrotum and damage the sperm cells, thereby reducing fertility. As a consequence, various alternatives to traditional chlorination have been sought.

Methods for optimizing conditions in chlorinated pools are known in the art. These methods are not suited for treating a biological pool as the operation conditions of chlorinated pools are optimized for killing any microorganism present in said pools, for example by use of chlorination techniques as are discussed hereabove.

A common alternative to chlorination is the biological removal of inorganic nitrogenous compounds, such as ammonium (NH₄⁺) and nitrate (NO₃) from aquatic systems. This removal has long been a topic of interest for wastewater engineers and other water treatment professionals. These compounds contribute to eutrophication and are toxic to many aquatic organisms. Therefore their presence in treated wastewater and in clean water systems, such as ponds, lakes, and reservoirs, is undesirable (Shannon et al, 2008). Solutions to biologically treat aquatic systems are for example known from WO 2016/179 390 and WO 2014/189 963. WO '390 and WO '963 disclose compositions suitable for removing nitrate from an aqueous medium. However, both have the disadvantage that the bacterial metabolism of the species requires a few days to be effective. During that period algal bloom may occur. As in a true biological pool no disinfectant can be used to clarify the water, it is very difficult to bridge this transition period without algal bloom. No easy to implement solution to this problem has been found to this date.

CN 104 222 076 discusses a bacterial agent for use as a microbial pesticide. CN '076 does not disclose any system or method for optimizing treatment of a biological pool. The document US2005/036982 A1 discloses an other known method for inhibiting the growth of or killing microorganisms such as algae.

The present invention aims to resolve at least some of the problems and disadvantages mentioned above.

### SUMMARY OF THE INVENTION

The invention relates to a method suitable for optimizing a biological treatment of pools according to claim 1.

Preferred embodiments of the method suitable for optimizing a biological treatment of pools are shown in any of the claims 2 to 14. In particular, said embodiments relate to an increased buffer capacity of the water, an increased chemical stability, an increased biological stability, thus preventing algal bloom. In particular algal bloom is prevented after a startup of a pool.

### DESCRIPTION OF FIGURES

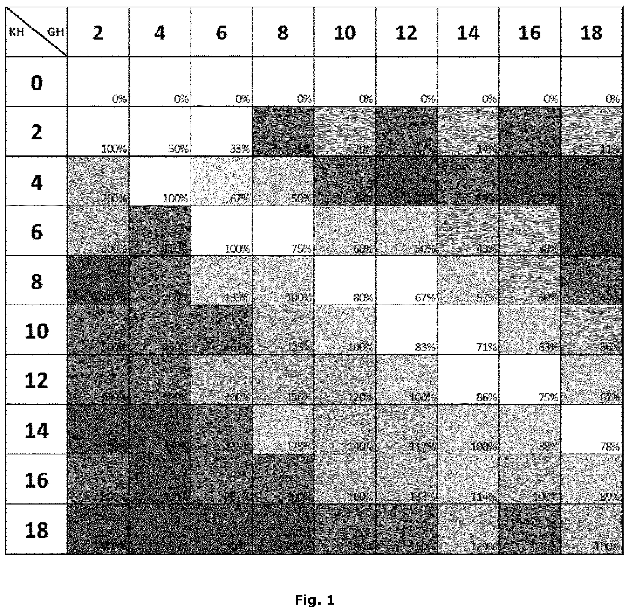

**Figure 1** shows a schematic overview of the algae growth in relation to the carbonate hardness (KH) and the global hardness (GH).

### DETAILED DESCRIPTION OF THE INVENTION

The present disclosure addresses limitations known in the art related to biological treatment methods for swimming pools. More in particular, the invention relates to a method suitable for optimizing a biological treatment of pools. Said method comprises the monitoring of one or more system parameters comprising a carbonate hardness (KH), a global hardness (GH) which refers to the concentration of divalent metal ions in water, and a potential of Hydrogen (pH), wherein the pH is maintained within a range of about 6.5 to 8.5, and wherein a ratio of the KH and GH (KH/GH) is maintained within a range of about 60 % to 95 %, wherein the GH is maintained within a range of about 50 ppm to 370 ppm, and wherein the KH/ GH is maintained within the range for at least about 7 days after the startup.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

The terms "microbial", "bacteria" or "microbes" as used herein, refer to microorganisms that confer a benefit. The microbes according to the invention may be viable or non-viable. The nonviable microbes are metabolically-active. By "metabolically-active" is meant that they exhibit at least some residual enzyme or secondary metabolite activity characteristic to that type of microbe.

By the term "viable bacteria" as used herein is meant a population of bacteria that is capable of replicating under suitable conditions under which replication is possible. A population of bacteria that does not fulfill the definition of "non-viable" (as given above) is considered to be "viable." "Wastewater," as used herein, is directed to domestic sewage from dwellings, business buildings, institutions, and farms, which contain ground water, surface water, and/or storm water.

By the term "non-viable" as used herein is meant a population of bacteria that is not capable of replicating under any known conditions. However, it is to be understood that due to normal biological variations in a population, a small percentage of the population (i.e. 5% or less) may still be viable and thus capable of replication under suitable growing conditions in a population which is otherwise defined as non-viable.

The term "active" (bacterial) cells as used herein refers to the number of viable cells. The amount of active, i.e. viable, cells may be specified in any unit or measure that is commonly used in the art. For example, the amount of active cells may be given in the number of viable cells or colony forming units (cfu) per gram sample.

The term "conservation agent" as defined herein, refers to an agent that aids the conservation and/or stabilization of a bacterial agent. Conservation agents comprise for example, but are not limited to, cryoprotectants.

The term "cryoprotectant" as defined herein, refers to a substance used to protect bacterial cells from damage during freezing, freeze-drying and thawing as well as during storage. The cryoprotectant may be any additive as long as it protects cells from damage during freezing, freeze-drying, thawing and storage. Examples of cryoprotectants include, but are not limited to, sugars (e.g. sucrose, fructose, trehalose), polyalcohols (e.g. glycerol, sorbitol, mannitol), polysaccharides (e.g. celluloses, starch, gums, maltodextrin), polyethers (e.g. polypropylene glycol, polyethylene glycol, polybutylene glycol), antioxidants (e.g. natural antioxidants, such as ascorbic acid, beta-carotene, vitamin E, glutathione, or chemical antioxidants), oils (e.g. rapeseed oil, sunflower oil, olive oil), surfactants (e.g. Tween 20, Tween 80, fatty acids), fats, peptones (e.g. soy peptones, wheat peptone, whey peptone), tryptones, vitamins, minerals (e.g. iron, manganese, zinc), hydrolysates (e.g. protein hydrolysates such as whey powder, malt extract, soy, casein hydrolysate), amino acids, peptides, proteins, nucleic acids, nucleotides, nucleobases (e.g. cytosine, guanine, adenine, thymine, uracil, xanthine, hypoxanthine, inosine, inositol), yeast extracts (e.g. yeast extracts of Saccharomyces spp., Kluyveromyces spp., or Torula spp.), beef extract, growth factors, and lipids. Other examples of cryoprotectants are disclosed in WO 2012/088 261 and WO 2012/076 665. The addition of a cryoprotectant in a process of the invention may be done by mixing a solid cryoprotectant with the bacteria concentrate for a sufficient time period at a suitable temperature.

The term "total alkalinity" (TA) refers to the total amount of cations associated with carbonate, bicarbonate ions and hydro peroxides, and is expressed by the conventional units, ppm (or mg/l) as CaCO3, i.e., the number of equivalents times the equivalent weight of CaCO3.

The term "carbonate hardness" refers to the total amount of carbonate and bicarbonate ions, and is expressed by the conventional units, ppm (or mg/l) as CaCO3, i.e., the number of equivalents times the equivalent weight of CaCO3.

The term "global hardness" refers to the concentration of divalent metal ions such as calcium and magnesium per volume of water, and is expressed by the conventional units, ppm (or mg/l) as CaO, i.e., the number of equivalents times the equivalent weight of CaO.

The term "dispensing system" as defined herein, refers to a mechanical and/or manual system for dispensing a composition (such as for example a powder) in a system (such as for example a pool).

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The method of the invention can be carried out in a system comprising a water quality measurement system adapted to monitor one or more system parameters, wherein said one or more parameters are preferably a carbonate hardness (KH), a global hardness (GH), and a potential of Hydrogen (pH); and a dispensing system adapted to dispense a composition, wherein said composition comprises a mineral agent and a bacterial agent.

In a true biological pool no disinfectant can be used to clarify the water. Adding a bacterial agent or applying a filtration step to the water is key but not sufficient. The inventors unexpectedly observed that a proper calco-carbonic equilibrium prevents algal bloom in a pool. This equilibrium will act as a buffer to prevent significant water quality changes with time, circadian cycles, weather conditions, and most other external parameters. Key to this buffering capacity is the ratio of the carbonate hardness (KH) to the global hardness (GH). By preventing significant water quality changes with time, using a KH/GH ratio of at least within a range of about 60 % to 95 %, algal bloom is prevented.

The inventors also unexpectedly observed that bacteria are metabolically more active under a fixed KH/GH ratio within a range as specified above, despite strong variations of nutrients in the pool. Moreover it is important to note that an optimal KH/GH ratio can be maintained in every pool, irrespective of the absolute value of the KH or the GH, which makes using a fixed KH/GH ratio a very easy to implement solution. By employing a system that comprises a water quality measurement system and a dispensing system, the overall user-friendliness of the solution is further enhance.

According to the invention, the KH/GH is maintained within the range for a period of time after a startup of the pool, the period of time selected from a group consisting of: at least about 7 days after the startup, preferably at least about 10 days after the startup, and more preferably at least about 15 days after the startup. According to the invention the KH/GH is maintained within a range of about 60 % to 95 %, preferably of about 65 % to 90 %, and most preferably of about 70 % to 85 %.

After a startup of a pool, the metabolism of the bacteria in the water require a few days to be effective. The inventors observed an average period of about 7 to 15 days. During that period algal bloom may occur. As in a true biological pool no disinfectant can be used to clarify the water, it is very difficult to bridge this transition period without algal bloom. Once a pool is affected with algal bloom, a long period must be foreseen in order to re-clarify the pool in a biological matter. Therefore it is of the utmost importance that the during this transition period no algal bloom occurs.

The inventors observed that a proper calco-carbonic equilibrium is required to inhibit algal growth during this period. This equilibrium will act as a buffer to prevent significant water quality changes with time, circadian cycles, weather conditions, and most other external parameters. Key to this buffering capacity is the ratio of the global hardness (GH) to the carbonate hardness (KH). As the pool is the most vulnerable to fouling or algal bloom after a startup, it is of the utmost importance that the daily variations are buffered.

In a preferred embodiment of the invention, the method further comprises the monitoring of the calcium-ion (Ca²⁺) concentration. Said method further comprises maintaining said Ca²⁺ concentration within a range of about 65 ppm to 305 ppm, preferably within a range of about 75 ppm to 295 ppm, and most preferably within a range of about 85 ppm to 285 ppm.

In a preferred embodiment of the invention, the method further comprises the monitoring of the magnesium-ion (Mg²⁺) concentration. Said method further comprises maintaining said Mg²⁺ concentration within a range of about 5 ppm to 50 ppm, preferably within a range of about 10 ppm to 45 ppm, and most preferably within a range of about 12 ppm to 42 ppm.

In a preferred embodiment of the invention, the method further comprises the monitoring of the calcium-ion (Ca²⁺) concentration and the magnesium-ion (Mg²⁺) concentration. Said method further comprises maintaining a ratio of the Mg²⁺ concentration to the Ca²⁺ concentration is maintained within a range of about 5 % to 25 %, more preferably of about 10 % to 20 %, and most preferably of about 15%.

According to the invention, the GH is maintained within a range of about 50 ppm to 370 ppm, preferably of about 70 ppm to 350 ppm, and most preferably of about 100 ppm to 330 ppm.

In a preferred embodiment of the invention, the KH is maintained within a range of about 45 ppm to 350 ppm, preferably of about 65 ppm to 340 ppm, and most preferably of about 96 ppm to 320 ppm.

It is important that the KH, GH, the Ca²⁺ concentration and the Mg²⁺ concentration are kept in the ranges as specified above. This is essential in order to prevent scale formation, staining, and cloudy water. When water has a KH and/or GH that is too high, there is a tendency for the formation and build-up of scale. Scale build-up, cloudy water, and staining is caused by the build-up of metal ions in the pool and cause the water to become cloudy, develop mineral deposits, and stain the walls or floor of the swimming pool. Scale build-up is deleterious in that it can block or plug up drains and outlets in the dispenser so that any flow is deterred or stopped. When water has a KH and/or GH that is too low, there is a tendency for plaster and grout to deteriorate and metal to corrode.

One of the daily water variations is caused by the circadian cycle. During the day photosynthesis is consuming CO₂, which results in a reduction of its concentration in the water. During the night bacterial activity in the absence of photosynthesis leads to an increased concentration of CO₂. During the night carbonic acid is produced and the CO₂ concentration in the pool decreases. During the day carbonic acid is consumed and the CO₂ concentration in the pool increases. As a result there is an inverse relationship between the CO₂ concentration and the pH of the water. These daily variations further enhance the eutrophication by contributing to an imbalanced environment where opportunistic algae can bloom. In the presence of mineral in the water, such as for example calcium carbonate, the increase of CO₂ leads to the synthesis of calcium bi-carbonate (Ca(HCO₃)₂), which is soluble. Hence the daily variations of CO₂ and pH are buffered. Such an environment is more balanced and will significantly reduce the risk of opportunistic algal bloom. Similarly, the weather conditions also affect the CO₂ concentration and subsequently the pH of the water. The inventors unexpectedly observed that by maintaining a KH, GH, Ca²⁺ concentration and Mg²⁺ concentration within a range as specified above, the daily variations of CO₂ and pH are optimally buffered. Such an environment is not imbalanced and will significantly reduce the risk of opportunistic algal bloom.

In an embodiment of the invention, the ratio TA:KH:GH is maintained within the range for a period of time after a startup of the pool, the period of time selected from a group consisting of: at least about 7 days after the startup, at least about 10 days after the startup, and at least about 15 days after the startup.

In order to bring the pH level of water within the human comfort zone, it is necessary to add acid to the water. However the amount of acid required to adjust the pH level of the water to a pH value in the human comfort zone, will result in the TA of the water and to a lesser extent the calcium content of the water being reduced to unmanageable levels. At these unmanageable levels, the water will reach a permanently unbalanced state if no significant amounts of alkaline compounds are also added to the water. Such permanently unbalanced water is often referred to as "dead water". The inventors observed that it is essential that water used in swimming pools has the correct balance of acidity/alkalinity and calcium. Unexpectedly, it has been found by the inventors that a ratio of TA:KH:GH maintained in a range of about 60:340:570 to 140:320:533 and preferably within a range of about 90:405:450 to 110:306:510, forms the most stable condition in the water. No algal fouling is possible in said ratio.

As discussed above, the metabolism of the bacteria in the water require a few days to be effective after a startup of a pool. Moreover it is crucial to the stability of the pool that the ratio of TA:KH:GH is maintained within the proper range for at least about 7 days after the startup, preferably at least about 10 days after the startup, and most preferably at least about 15 days after the startup, as the pool is the most vulnerable to fouling or algal bloom after said initial period after a startup.

In a preferred embodiment of the invention, the pool has a turnover rate, wherein said turnover rate depends on an average depth of the pool, wherein: a pool with an average depth greater than 1.5m, has a turnover rate of about 1 hour to 5 hours, and preferably of about 1.5 hours to 4 hours; a pool with an average depth between about 0.8m and 1.5m, has a turnover rate of about 0.5 hours to 3 hours, preferably of about 1 hour to 2 hours; a pool with an average depth less than 0.8m, has a turnover rate of about less than 1 hour, preferably about less than 0.5 hours.

As there is no disinfectant in a true biological pool, it is of the utmost importance that there is a proper dilution of any germ brought into the pool by for example the bathers or the environment. Moreover a proper dilution of any agent, for example a bacterial agent or a mineral agent, is of the utmost importance to assure a maximum of effect of said agent. Thus the filtration of a volume of the pool at a given pace is essential. The inventors unexpectedly observed that the optimal turnover rate depends on the average depth of the pool.

In a preferred embodiment of the invention, the method further comprises circulating a quantity of water of the pool through at least one filtration system, and wherein the at least one filtration system comprises at least one mechanical filtration system and/or at least one biological filtration system. Particles in suspension in the pool, whether mineral or organic, should be removed, as said particles are difficult to biologically degrade. In particular, particles with an equivalent sphere diameter (ESD) in the range of 30 µm to 400 µm are difficult to biologically degrade. Said suspended particles are preferably removed using a mechanical filtration system. In order to host bacteria that will metabolize organic matter, a substrate is needed. In general said substrate is provided in the form of a biological filtration system.

In an embodiment of the invention, the mechanical filtration system removes particles with an ESD in a range of 30 µm to 400 µm, preferably in a range of 40 µm to 350 µm, and most preferably in a range of 50 µm to 300 µm.

In a preferred embodiment of the invention, the method further comprises circulating a quantity of water of the pool through at least one filtration system, and wherein 50 % of the quantity of water is collected from a water surface of the pool, preferably using a surface skimmer and/or an overflow.

A surface of a pool is the most prone region to fouling. For example fouling by bathers or fouling due to the environmental parameters such as wind. The inventors observed that by collecting 50 % of the circulated quantity of water from the surface of a pool, a maximum amount of particles and suspended solids are collected.

In a preferred embodiment of the invention, the at least one mechanical filtration system comprises at least one vortex filter or a variant thereof. In an embodiment of the invention, the at least one vortex filter or a variant thereof removes particles with an ESD in a range of 30 µm to 400 µm, preferably in a range of 40 µm to 350 µm, and most preferably in a range of 50 µm to 300 µm.

Particles that are biologically difficult degradable have to be removed from the pool, preferably using at least one vortex filter or a variant thereof. In particular the inventors observed that vortex filters are efficient in the removal of suspended particles. More in particular the inventors observed that vortex filters are efficient in the removal of suspended particles with an ESD in a range of 30 µm to 400 µm.

In a preferred embodiment of the invention, the at least one biological filtration system comprises at least one fluidized bed filter or a variant thereof. In an embodiment of the invention, the biological filtration system comprises at least one fluidized bed filter or a variant thereof, wherein the at least one fluidized bed filter comprises a volume of beads per square meter (L of beads per m³), preferably between 1 L of beads per m³ to 2 L of beads per m³, more preferably between 1.2 L of beads per m³ to 1.7 L of beads per m³, most preferably between 1.25 L of beads per m³ to 1.6 L of beads per m³.

By using at least one fluidized bed filter as the biological filtration system, the bacteria have an increased surface suitable for colonization. By increasing the colonization surface, a larger amount of bacteria is present in the biological filtration system resulting in an increased consumption of organic matter, nitrate, nitrite, or phosphorus. The inventors unexpectedly observed that a fluidized bed filter with about 1 L of beads per m³ to 2 L of beads per m³ is optimal at temperature below 30 °C. Unexpectedly an increased degradation of organic matter is observed in said range.

In an embodiment of the invention, the biological filtration system is operated at a pressure greater than the atmospheric pressure (g), preferably greater than 2 g, more preferably greater than 5 g, and most preferably greater than 10 g. By operating the biological filtration system at pressures greater than the atmospheric pressure, the solubility of gases, such as oxygen (O₂), is enhanced, resulting in an increased consumption of the bacteria present in the biological filtration system.

In a preferred embodiment of the invention, the method further comprises at least one disinfection system, and wherein the at least one disinfection system comprises preferably at least one ultra-violet (UV) light source.

The bacterial disinfection of the circulated quantity of water is performed using ultraviolet (UV) lamps (or deep-UV lamps), such as low to medium pressure mercury lamps. For example, the circulated quantity of water may be disinfected using such lamps, for a germicidal effect, in a conventional point-of-use (POU) water filtration system. The deoxyribonucleic acid (DNA) of bacteria, viruses, cysts, and the like absorbs the UV radiation and the reproductive capabilities of the biological entities are thereby deactivated. Unlike chlorinated methods of water disinfection, the UV radiation does not impact the biological stability of the water. The UV disinfection of the circulated quantity of water prevents the spread of infections. Moreover the UV disinfection is also used to control free-floating algae. As the spread of infectious microorganisms and free-floating algae is prevented, the overall stability of the water is increased. More in particular, the biological stability of the pool is ensured.

In a preferred embodiment of the invention, the method further comprises a dosing of a mineral agent and/or a bacterial agent.

As can be understood, the mineral agent and the bacterial agent are interdependent and work closely with each other to facilitate the easy degradation of pollutants and the maintenance of the stability of the pool, in particular the biological stability and the chemical stability (for example the buffering capacity).

In a preferred embodiment of the invention, the mineral agent comprises sodium carbonate, sodium bicarbonate, calcium chloride, and magnesium sulfate.

The inventors observed that the salts: sodium carbonate, sodium bicarbonate, calcium chloride, and magnesium sulfate, are most suited to maintain the KH/GH.

In an embodiment of the invention, the mineral agent further comprises a macro element agent, and a trace element agent, wherein said macro element agent comprises one or more macro elements selected from the group: magnesium sulfate, sodium chloride, sodium carbonate, sodium bicarbonate, calcium chloride, magnesium chloride, magnesium sulfate, and potassium sulfate, preferably sodium carbonate, sodium bicarbonate, calcium chloride, and magnesium sulfate, and wherein said trace element agent comprises one or more ions or compounds of the metals: copper, cobalt, chromium, molybdenum, nickel, wolfram, and zinc.

The macro element agent directly enhances the growth and sustenance of microbes in the pool and/or the filter, which are responsible for utilizing the simpler molecules in their metabolic activities thereby aiding in the complete degradation of the pollutants in the water. Without the nutrients of the macro element agent, growth of the microbes is compromised which in turn affects their ability to degrade pollutants.

The trace element agent comprises of inorganic salts of metal ions, which are necessary for enzyme catalysis facilitating in the bond dissociation of the pollutant molecule, which is of importance as sooner the bond dissociation, sooner is the degradation of the pollutants. In an embodiment of the invention, ferrous sulphate heptahydrate and ferric chloride are added to the composition to provide a mixture of Fe⁺² and Fe⁺³ ions. In the presence of Fe⁺², the enzymes have a more enhanced capacity to catalyze the bond dissociation of the pollutant molecules. Fe⁺² also aid in the metabolism of microbial cells. In the absence of Fe⁺², the degradation of pollutants in effluent or wastewater is compromised. In a further embodiment of the invention, hydrogen peroxide is added. Hydrogen peroxide releases molecular oxygen that facilitates enzyme catalysis. Hydrogen peroxide also reacts with Fe⁺² and reduces color by this reaction.

In a preferred embodiment of the invention, the bacterial agent comprises a mixture of species selected from the genera Bacillus, Paenibacillus, and Paracoccus.

As a proxy for the proper completion of the nitrogen cycle, the species of the bacterial agent were selected on their ability to reduce the biological Oxygen Demand (BOD), the Chemical Oxygen Demand (COD), the phosphor concentration, the nitrate concentration, and the nitrite concentration. The inventors observed that separate species selected from the genera Bacillus, Paenibacillus, and Paracoccus yielded excellent performances in this regard. Moreover the inventors unexpectedly observed that combinations of species of the genera Bacillus, Paenibacillus, and Paracoccus yielded a synergistic effect in their overall ability to properly complete the nitrogen cycle.

In a preferred embodiment of the invention, the mineral agent and/or the bacterial agent is a wettable powder, an aqueous suspension, an aqueous emulsion, or a combination thereof, preferably an aqueous suspension or an aqueous emulsion.

By using a wettable powder, an aqueous suspension, an aqueous emulsion, or combinations thereof, the mineral agent and/or the bacterial agent is fully dispersed upon the addition to water. Agents that are not fully dispersed upon addition to water have the disadvantage that the contact surface is smaller compared to fully dispersed compositions, thereby limiting the efficacy of the different agents. In a specific embodiment of the invention, the composition further comprises a dispersing agent.

In a preferred embodiment of the invention, the mineral agent and/or the bacterial agent are dosed at a startup of the pool and at regular intervals after said startup, preferably at least once every year, more preferably at least once every 6 months, most preferably at least once every month.

Cleaning cycles of the filtration system as well as the varying availability of nutrients in the water, will eventually lead to varying bacterial population in the biological filtration system. Hence, regular addition of the appropriate bacterial agent and nutrient agent is necessary for a long term maintenance of the pool

As discussed hereabove, a common alternative to chlorination is the biological removal of inorganic nitrogenous compounds, such as ammonium (NH₄⁺) and nitrate (NO₃) from aquatic systems. These compounds contribute to the eutrophication of aquatic systems and are toxic to many aquatic organisms. Therefore, their presence in clean water systems, such as ponds, lakes and reservoirs, is undesirable. In order to remove said compounds using a biological treatment, a proper completion of the nitrogen cycle is required.

The nitrogen cycle is the cycle by which nitrogen is converted into multiple chemical forms as it circulates among aquatic ecosystems. The conversion of nitrogen can be carried out through both biological and physical processes. In a first step of the nitrogen cycle organic matter is degraded. The degradation of organic matter releases organic nitrogen into ammonia-like compounds. These compounds are then converted into nitrite and nitrate. Nitrate can be assimilated by plants or algae. Alternatively, nitrate can be assimilated by certain genera of bacteria or denitrified into gaseous nitrogen. In order to achieve a proper completion of the nitrogen cycle, bacterial species in an aquatic environment have to be able to remove the BOD and the COD, as well as the generated phosphorous, nitrate and nitrite concentration.

In light of the above, the invention particularly relates to, and provides solutions in, the improvement of the nitrogen cycle, in order to rapidly degrade organic matter without the accumulation of nitrate, nitrite, or phosphorus. The solutions are discussed throughout the description and the examples. In particular, the invention pertains to establishing biochemical conditions that are favorable to the bathers, the diversity of aquatic life and the growth conditions of microorganisms essential in the completion of the nitrogen cycle. As a consequence, the invention is especially advantageous for optimizing a biological treatment of pools.

Microorganisms essential in the completion of the nitrogen cycle are in general present in aquatic systems. However, the inventors observed that species selected from the genera *Bacillus* and *Paracoccus* yield excellent performances in this regard. Preferably, a bacterial agent comprising species from the *Bacillus* and *Paracoccus* genera is added to the treated pool. In order to optimize biological treatment of pools, these species can be added to the treated pool. Furthermore, the inventors note that these species can be cultured or grown in a shared environment, likely because of low or non-observable antagonistic properties between said species, thus further optimizing biological treatment of the treated pool. The inventors thus unexpectedly observed that combinations of species of the genera *Bacillus* and *Paracoccus* yield a synergistic effect in their overall ability to properly complete the nitrogen cycle.

Some microorganisms are suited for degrading organic matter. In particular, said microorganisms are suited for removing the BOD and/or the COD. The inventors note that *Bacillus* species selected from the group comprising: *Bacillus pumilus, Bacillus licheniformis, Bacillus amyloliquefaciens, Bacillus circulans* and *Bacillus subtilis,* yield unexpectedly high organic matter, i.e. BOD and COD, degrading results.

Some microorganisms are suited for phosphate removal. In particular, the inventors note that *Bacillus* species from the group: *Bacillus pumilus, Bacillus licheniformis, Bacillus amyloliquefaciens, Bacillus circulans* and *Bacillus subtilis,* and *Paracoccus* species from the group: *Paracoccus denitrificans, Paracoccus aminovorans,* and *Paracoccus pantotrophus,* are especially suited for phosphate removal. Furthermore, the inventors note that *Bacillus* species and *Paracoccus* species have small or even non-observable antagonistic effects when cultured or grown together in an aquatic environment. Some microorganisms may have the ability to assimilate phosphorus, which enters into the composition of several macromolecules in the cell of a microorganism. Some microorganisms may have the ability to store phosphorus as polyphosphates in volutin granules. However, it is known that to be able to remove phosphate from an aquatic environment, microorganisms require various cations, such as magnesium and calcium. In order to provide sufficient growth and phosphate removal, the above cations should be present above a critical concentration in the growth environment, i.e. the aquatic environment.

Some microorganisms are suited for nitrate and nitrite removal. Under anoxic conditions, nitrate or nitrite are used as an electron acceptor instead of oxygen by facultative anaerobic *Bacillus* species. Ponds are generally strongly aerated, thus the *Bacillus* species are mostly responsible for the removal of inorganic nitrogen and phosphorus forms using an oxidative pathway. The end of the oxidative pathway is nitrate, which may accumulate in the environment. The inventors note that species selected from the *Paracoccus* genus, such as *Paracoccus denitrificans, Paracoccus aminovorans* and *Paracoccus pantotroph,* are unexpectedly efficient in their removal of nitrogen. It is known in the art, that nitrifying bacteria use ammonium as an energy source and consume calcium carbonate as a carbon source. As a consequence, to be able to remove nitrogen, microorganisms require cations such as calcium. In order to provide sufficient growth and nitrite removal, calcium should thus be present above a critical concentration in the growth environment, i.e. aquatic environment.

The magnesium concentration in the growth environment is particularly crucial for a biological water treatment. Magnesium may approximately constitute up to 1 % of the dry weight of a microbial cell. Magnesium is the cofactor for some enzymes and as a consequence stimulates enzyme reactions associated with synthesis of cell materials. The importance of magnesium cations for microorganisms responsible for biological phosphorus removal is even more significant. Magnesium cations are an important counterion for polyphosphate in a cell and are taken up and simultaneously released with phosphate. As a consequence, magnesium cations are necessary for polyphosphate accumulation in biological phosphorus removal. The inventors note that when the magnesium concentration is greater than 5 ppm, phosphate removal from aquatic environments is substantially higher compared to lower concentrations, while also providing substantial buffering capacities to prevent significant water quality changes with time, circadian cycles, weather conditions and most other external parameters. These conditions are especially advantageous during start-up of a pool. Magnesium concentrations in the range of 5 pp to 50 ppm are preferred. According to the inventors, optimal magnesium concentrations are in the range of 10 ppm to 45 ppm and most preferably within the range of 12 ppm to 42 ppm, due to an increasing removal efficiency of phosphate from aquatic environments as well as an increasing buffering capacity.

The calcium concentration in the growth environment is particularly crucial for a biological water treatment. Calcium serves as a universal messenger, transmitting signals from the cell surface to the interior of the cell. As disclosed hereabove, calcium is also a required cation for microorganisms to be able to remove phosphate from an aqueous environment. Furthermore, the inventors note that when the calcium concentration is greater than 65 ppm, phosphate removal and nitrifying activity is substantially higher in aquatic environments compared to lower concentrations, while also providing substantial buffering capacities to prevent significant water quality changes with time, circadian cycles, weather conditions and most other external parameters. These conditions are especially advantageous during start-up of a pool. The above buffering capacity is crucial, as while the calcium carbonate is being consumed, nitrous acid is being formed and the total alkalinity of the liquid declines, which in turn may cause a decline in the growth rate of nitrifying bacteria. Calcium concentrations in the range of 65 pp to 305 ppm are preferred. According to the inventors, optimal calcium concentrations are in the range of 75 ppm to 295 ppm and most preferably within the range of 85 ppm to 285 ppm, due to an increasing removal efficiency of phosphate and nitrite from aquatic environments as well as an increasing buffering capacity.

In order for the nitrogen cycle to be properly completed, both magnesium cations and calcium cations are required in the aquatic environment. The inventors note that a ratio of the magnesium cation concentration to the calcium cation concentration should be maintained above 5 %, preferably within a range of about 5 % to 25 %, more preferably of about 10 % to 20 %, and most preferably at about 15%.

The biological treatment system suitable for optimizing a biological treatment of pools comprises a means for monitoring the one or more system parameters comprising the KH, GH and pH. Preferably, the system also comprises a means for administering one or more compounds for maintaining the pH within a range of about 6.5 to 8.5. Preferably, the system also comprises a means for administering one or more compounds for maintaining the KH/GH within a range of about 65 % to 90 %. Preferably, the above means are automated. Alternatively, the means for monitoring the one or more system parameters comprise one or more testing kits. Such testing kits are known in the art. Alternatively, the means for administering the compounds for maintaining the pH and the KH/GH ration in the preferred ranges are manual means. Such manual means are known in the art.

### DESCRIPTION OF FIGURES

The following description of the figures of specific embodiments of the invention is merely exemplary in nature and is not intended to limit the present teachings, their application or uses. Throughout the drawings, corresponding reference numerals indicate alike or corresponding parts and features.

Figure 1 shows a schematic overview of the algal growth in relation to the carbonate hardness (KH) and the global hardness (GH). In particular in function of the ratio of the KH and the GH (KH/GH). The x-axis shows an increasing GH, whereas the y-axis shows an increasing KH. Algal growth is indicated by an increased intensity of grey values. The schematic overview clearly illustrates an increased algal growth as the KH/GH ratio deviates from the diagonal cross of the schematic overview. In particular, almost no algal growth is observed for the KH/GH ratios of about 60 % to 95 %, more in particular 65 % to 90 %, and most in particular 70 % to 85 %. An adequate KH/GH ratio ensures the maintenance of clear waters regardless of variable addition of nutrients to the water coming either from the wind, from bathers, or, in the case of ponds, from feeding.

The present invention is in no way limited to the embodiments shown in the figures. On the contrary, methods according to the present invention may be realized in many different ways without departing from the scope of the invention, which is defined by the claims annexed to this description.

### EXAMPLES

The invention is further described by the following non-limiting examples which further illustrate the invention, and are not intended to, nor should they be interpreted to, limit the scope of the invention.

### Example 1

Example 1 relates to the prevention of algal bloom using a calco-carbonic equilibrium according to the current invention. The results are illustrated by Figure 1.

### Example 2

Example 2 relates to the faster reactivation of the bacteria. For long term conservation, bacteria are typically freeze dried or spray dried. To reactivate bacteria that have been treated in such a way, it takes between a few days to a few weeks according to the strains. During that period, even when maintaining a proper KH/GH ratio, the water undergoes significant changes due to the progressive development of all the bacterial strains. Hence, there may be an initial period when enriching the bio filtration when the use of the pool can be affected by an algal bloom.

Reducing this period requires a faster reactivation of the bacteria used in the composition. The inventors performed a series of experiments using different conservation agents. On average the addition of the different conservation agents resulted in a decreased reactivation time from 15 to 20 days to 10 to 14 days. Long term conservation of the bacteria in 30% propylene glycol unexpectedly allows for the fastest reactivation of all the tested conservation agents. For 30% propylene glycol, the reactivation time decreased from 15 to 20 days to 2 to 5 days, suggesting an interplay between propylene glycol and different constituents of the composition and/or the conditions operated in the pool.

## Claims

1. A method suitable for optimizing a biological treatment of pools, wherein the method comprises the monitoring of one or more system parameters comprising a carbonate hardness (KH), a global hardness (GH) which refers to the concentration of divalent metal ions per volume of water, and a potential of Hydrogen (pH), wherein the pH is maintained within a range of about 6.5 to 8.5, and **characterized in that** a ratio of the KH and GH (KH/GH) is maintained within a range of about 60 % to 95 %, wherein the GH is maintained within a range of about 50 ppm to 370 ppm, and wherein the KH/GH is maintained within the range for at least about 7 days after the startup.

2. The method according to claim 1, wherein the KH/GH is maintained within the range for a period of time after a startup of the pool, the period of time selected from a group comprising: at least about 10 days after the startup, and at least about 15 days after the startup.

3. The method according to any of the preceding claims 1 or 2, wherein the GH is maintained within a range of about 70 ppm to 350 ppm, and most preferably of about 100 ppm to 330 ppm.

4. The method according to any of the preceding claims 1 to 3, wherein the method further comprises the monitoring of the calcium-ion (Ca²⁺) concentration, and wherein said Ca²⁺ concentration is maintained within a range of about 65 ppm to 305 ppm, preferably within a range of about 75 ppm to 295 ppm, and most preferably within a range of about 85 ppm to 285 ppm.

5. The method according to any of the preceding claims 1 to 4, wherein the method further comprises the monitoring of the magnesium-ion (Mg²⁺) concentration, and wherein said Mg²⁺ concentration is maintained within a range of about 5 ppm to 50 ppm, preferably within a range of about 10 ppm to 45 ppm, and most preferably within a range of about 12 ppm to 42 ppm.

6. The method according to any of the preceding claims 1 to 5, wherein the method further comprises the monitoring of the calcium-ion (Ca²⁺) concentration and the magnesium-ion (Mg²⁺) concentration, and the wherein a ratio of the Mg²⁺ concentration to the Ca²⁺ concentration is maintained within a range of about 5 % to 25 %, more preferably of about 10 % to 20 %, and most preferably of about 15%.

7. The method according to any of the preceding claims 1 to 6, wherein the KH is maintained within a range of about 45 ppm to 350 ppm, preferably of about 65 ppm to 340 ppm, and most preferably of about 96 ppm to 320 ppm.

8. The method according to any of the preceding claims 1 to 7, wherein the pool has a turnover rate, and wherein said turnover rate depends on an average depth of the pool, and wherein:
- a pool with an average depth greater than 1.5 m has a turnover rate of about 1 hour to 5 hours, and preferably of about 1.5 hours to 4 hours;
- a pool with an average depth between about 0.8 m and 1.5 m has a turnover rate of about 0.5 hours to 3 hours, preferably of about 1 hour to 2 hours;
- a pool with an average depth less than 0.8 m has a turnover rate of about less than 1 hour, preferably of about less than 0.5 hours.

9. The method according to any of the preceding claims 1 to 8, wherein the method further comprises circulating a quantity of water of the pool through at least one filtration system, and wherein the at least one filtration system comprises at least one mechanical filtration system and/or at least one biological filtration system, preferably wherein the at least one mechanical filtration system comprises at least one vortex filter or a variant thereof, and preferably wherein the at least one biological filtration system comprises at least one fluidized bed filter or a variant thereof.

10. The method according to any of the preceding claims 1 to 9, wherein the method further comprises a dosing of a mineral agent and/or a bacterial agent.

11. The method according to claim 10, wherein the mineral agent comprises sodium carbonate, sodium bicarbonate, calcium chloride, and magnesium sulfate.

12. The method according to any of the preceding claims 10 or 11, wherein the bacterial agent comprises a mixture of species selected from the genera *Bacillus, Paenibacillus,* and *Paracoccus.*

13. The method according to any of the preceding claims 10 to 12, wherein the mineral agent and/or the bacterial agent is a wettable powder, an aqueous suspension, an aqueous emulsion, or a combination thereof, preferably an aqueous suspension or an aqueous emulsion.

14. The method according to any of the preceding claims 10 to 13, wherein the mineral agent and/or the bacterial agent are dosed at a startup of the pool and at regular intervals after said startup, at least once every year, more preferably at least once every 6 months, most preferably at least once every month.

## Patentansprüche

1. Verfahren, das zum Optimieren einer biologischen Behandlung von Schwimmbecken geeignet ist, wobei das Verfahren das Überwachen eines oder mehrerer Systemparameter umfasst, die eine Karbonathärte (KH), eine Gesamthärte (GH), die sich auf die Konzentration von zweiwertigen Metallionen pro Wasservolumen bezieht, und ein Wasserstoffpotenzial (pH-Wert) umfassen, wobei der pH-Wert in einem Bereich von etwa 6,5 bis 8,5 gehalten wird, und **dadurch gekennzeichnet ist, dass** ein Verhältnis von KH und GH (KH/GH) in einem Bereich von etwa 60 % bis 95 % gehalten wird, wobei die GH in einem Bereich von etwa 50 ppm bis 370 ppm gehalten wird, und wobei das KH/GH für wenigstens etwa 7 Tage nach der Inbetriebnahme in dem Bereich gehalten wird.

2. Verfahren nach Anspruch 1, wobei das KH/GH für eine Zeitspanne nach der Inbetriebnahme des Schwimmbeckens innerhalb des Bereichs gehalten wird, wobei die Zeitspanne aus einer Gruppe ausgewählt wird, umfassend: wenigstens etwa 10 Tage nach der Inbetriebnahme und wenigstens etwa 15 Tage nach der Inbetriebnahme.

3. Verfahren nach einem der vorhergehenden Ansprüche 1 oder 2, wobei die GH in einem Bereich von etwa 70 ppm bis 350 ppm und am meisten bevorzugt von etwa 100 ppm bis 330 ppm gehalten wird.

4. Verfahren nach einem der vorhergehenden Ansprüche 1 bis 3, wobei das Verfahren ferner das Überwachen der Calcium-Ionen-Konzentration (Ca²⁺-Konzentration) umfasst und wobei die Ca²⁺-Konzentration in einem Bereich von etwa 65 ppm bis 305 ppm, vorzugsweise in einem Bereich von etwa 75 ppm bis 295 ppm und am meisten bevorzugt in einem Bereich von etwa 85 ppm bis 285 ppm gehalten wird.

5. Verfahren nach einem der vorhergehenden Ansprüche 1 bis 4, wobei das Verfahren ferner das Überwachen der Magnesium-Ionen-Konzentration (Mg²⁺-Konzentration) umfasst, und wobei die Mg²⁺-Konzentration in einem Bereich von etwa 5 ppm bis 50 ppm, vorzugsweise in einem Bereich von etwa 10 ppm bis 45 ppm und am meisten bevorzugt in einem Bereich von etwa 12 ppm bis 42 ppm gehalten wird.

6. Verfahren nach einem der vorhergehenden Ansprüche 1 bis 5, wobei das Verfahren ferner das Überwachen der Calcium-Ionen-Konzentration (Ca²⁺-Konzentration) und der Magnesium-Ionen-Konzentration (Mg²⁺-Konzentration) umfasst, und wobei ein Verhältnis der Mg²⁺-Konzentration zu der Ca²⁺-Konzentration in einem Bereich von etwa 5 % bis 25 %, stärker bevorzugt von etwa 10 % bis 20 % und am meisten bevorzugt von etwa 15 % gehalten wird.

7. Verfahren nach einem der vorhergehenden Ansprüche 1 bis 6, wobei die KH in einem Bereich von etwa 45 ppm bis 350 ppm, vorzugsweise von etwa 65 ppm bis 340 ppm und am meisten bevorzugt von etwa 96 ppm bis 320 ppm gehalten wird.

8. Verfahren nach einem der vorhergehenden Ansprüche 1 bis 7, wobei das Schwimmbecken eine Umsatzrate aufweist, und wobei die Umsatzrate von einer durchschnittlichen Tiefe des Schwimmbeckens abhängt, und wobei:
- ein Schwimmbecken mit einer durchschnittlichen Tiefe von mehr als 1,5 m eine Umsatzrate von etwa 1 Stunde bis 5 Stunden und vorzugsweise von etwa 1,5 Stunden bis 4 Stunden aufweist;
- ein Schwimmbecken mit einer durchschnittlichen Tiefe zwischen etwa 0,8 m und 1,5 m eine Umsatzrate von etwa 0,5 Stunden bis 3 Stunden, vorzugsweise von etwa 1 Stunde bis 2 Stunden aufweist;
- ein Schwimmbecken mit einer durchschnittlichen Tiefe von weniger als 0,8 m eine Umsatzrate von weniger als 1 Stunde, vorzugsweise von weniger als 0,5 Stunden aufweist.

9. Verfahren nach einem der vorhergehenden Ansprüche 1 bis 8, wobei das Verfahren ferner das Umwälzen einer Wassermenge des Schwimmbeckens durch wenigstens ein Filtersystem umfasst, und wobei das wenigstens eine Filtersystem wenigstens ein mechanisches Filtersystem und/oder wenigstens ein biologisches Filtersystem umfasst, wobei das wenigstens eine mechanische Filtersystem vorzugsweise wenigstens einen Wirbelfilter oder eine Variante davon umfasst, und wobei das wenigstens eine biologische Filtersystem vorzugsweise wenigstens einen Wirbelschichtfilter oder eine Variante davon umfasst.

10. Verfahren nach einem der vorhergehenden Ansprüche 1 bis 9, wobei das Verfahren ferner eine Dosierung eines mineralischen Mittels und/oder eines bakteriellen Mittels umfasst.

11. Verfahren nach Anspruch 10, wobei das mineralische Mittel Natriumcarbonat, Natriumbicarbonat, Calciumchlorid und Magnesiumsulfat umfasst.

12. Verfahren nach einem der vorhergehenden Ansprüche 10 oder 11, wobei das bakterielle Mittel eine Mischung von Arten umfasst, die aus den Gattungen *Bacillus*, *Paenibacillus* und *Paracoccus* ausgewählt sind.

13. Verfahren nach einem der vorhergehenden Ansprüche 10 bis 12, wobei das mineralische Mittel und/oder das bakterielle Mittel ein benetzbares Pulver, eine wässrige Suspension, eine wässrige Emulsion oder eine Kombination davon ist, vorzugsweise eine wässrige Suspension oder eine wässrige Emulsion.

14. Verfahren nach einem der vorhergehenden Ansprüche 10 bis 13, wobei das mineralische Mittel und/oder das bakterielle Mittel bei der Inbetriebnahme des Schwimmbeckens und in regelmäßigen Abständen nach der Inbetriebnahme dosiert wird, wenigstens einmal pro Jahr, vorzugsweise wenigstens einmal alle 6 Monate, am meisten bevorzugt wenigstens einmal pro Monat.

## Revendications

1. Procédé approprié pour optimiser un traitement biologique de piscines, dans lequel le procédé comprend la surveillance d'un ou plusieurs paramètres de système comprenant une dureté carbonatée (KH), une dureté globale (GH) qui fait référence à la concentration d'ions métalliques divalents par volume d'eau, et un potentiel d'hydrogène (pH), dans lequel le pH est maintenu dans une plage d'environ 6,5 à 8,5, et **caractérisé en ce qu'**un rapport du KH et du GH (KH/GH) est maintenu dans une plage d'environ 60 % à 95 %, dans lequel le GH est maintenu dans une plage d'environ 50 ppm à 370 ppm, et dans lequel le KH/GH est maintenu dans la plage pendant au moins environ 7 jours après le démarrage.

2. Procédé selon la revendication 1, dans lequel le KH/GH est maintenu dans la plage pendant une période de temps après un démarrage de la piscine, la période de temps choisie dans un groupe comprenant : au moins environ 10 jours après le démarrage, et au moins environ 15 jours après le démarrage.

3. Procédé selon l'une quelconque des revendications 1 ou 2 précédentes, dans lequel le GH est maintenu dans une plage d'environ 70 ppm à 350 ppm, et de manière préférée entre toutes d'environ 100 ppm à 330 ppm.

4. Procédé selon l'une quelconque des revendications 1 à 3 précédentes, dans lequel le procédé comprend en outre la surveillance de la concentration d'ions calcium (Ca²⁺), et dans lequel ladite concentration de Ca²⁺ est maintenue dans une plage d'environ 65 ppm à 305 ppm, de préférence dans une plage d'environ 75 ppm à 295 ppm, et de manière préférée entre toutes dans une plage d'environ 85 ppm à 285 ppm.

5. Procédé selon l'une quelconque des revendications 1 à 4 précédentes, dans lequel le procédé comprend en outre la surveillance de la concentration d'ions magnésium (Mg²⁺), et dans lequel ladite concentration de Mg²⁺ est maintenue dans une plage d'environ 5 ppm à 50 ppm, de préférence dans une plage d'environ 10 ppm à 45 ppm, et de manière préférée entre toutes dans une plage d'environ 12 ppm à 42 ppm.

6. Procédé selon l'une quelconque des revendications 1 à 5 précédentes, dans lequel le procédé comprend en outre la surveillance de la concentration d'ions calcium (Ca²⁺) et de la concentration d'ions magnésium (Mg²⁺), et dans lequel un rapport de la concentration de Mg²⁺ à la concentration de Ca²⁺ est maintenu dans une plage d'environ 5 % à 25 %, de manière davantage préférée d'environ 10 % à 20 %, et de manière préférée entre toutes d'environ 15 %.

7. Procédé selon l'une quelconque des revendications 1 à 6 précédentes, dans lequel le KH est maintenu dans une plage d'environ 45 ppm à 350 ppm, de préférence d'environ 65 ppm à 340 ppm, et de manière préférée entre toutes d'environ 96 ppm à 320 ppm.

8. Procédé selon l'une quelconque des revendications 1 à 7 précédentes, dans lequel la piscine présente un taux de renouvellement, et dans lequel ledit taux de renouvellement dépend d'une profondeur moyenne de la piscine, et dans lequel :
- une piscine ayant une profondeur moyenne supérieure à 1,5 m présente un taux de renouvellement d'environ 1 heure à 5 heures, et de préférence d'environ 1,5 heure à 4 heures ;
- une piscine ayant une profondeur moyenne entre environ 0,8 m et 1,5 m présente un taux de renouvellement d'environ 0,5 heure à 3 heures, de préférence d'environ 1 heure à 2 heures ;
- une piscine ayant une profondeur moyenne inférieure à 0,8 m présente un taux de renouvellement environ inférieur à 1 heure, de préférence environ inférieur à 0,5 heure.

9. Procédé selon l'une quelconque des revendications 1 à 8 précédentes, dans lequel le procédé comprend en outre la circulation d'une quantité d'eau de la piscine à travers au moins un système de filtration, et dans lequel l'au moins un système de filtration comprend au moins un système de filtration mécanique et/ou au moins un système de filtration biologique, de préférence dans lequel l'au moins un système de filtration mécanique comprend au moins un filtre à vortex ou une variante de celui-ci, et de préférence dans lequel l'au moins un système de filtration biologique comprend au moins un filtre à lit fluidisé ou une variante de celui-ci.

10. Procédé selon l'une quelconque des revendications 1 à 9 précédentes, dans lequel le procédé comprend en outre un dosage d'un agent minéral et/ou d'un agent bactérien.

11. Procédé selon la revendication 10, dans lequel l'agent minéral comprend le carbonate de sodium, le bicarbonate de sodium, le chlorure de calcium et le sulfate de magnésium.

12. Procédé selon l'une quelconque des revendications 10 ou 11 précédentes, dans lequel l'agent bactérien comprend un mélange d'espèces choisies parmi les genres *Bacillus, Paenibacillus* et *Paracoccus*.

13. Procédé selon l'une quelconque des revendications 10 à 12 précédentes, dans lequel l'agent minéral et/ou l'agent bactérien est une poudre mouillable, une suspension aqueuse, une émulsion aqueuse, ou une combinaison de celles-ci, de préférence une suspension aqueuse ou une émulsion aqueuse.

14. Procédé selon l'une quelconque des revendications 10 à 13 précédentes, dans lequel l'agent minéral et/ou l'agent bactérien sont dosés à un démarrage de la piscine et à intervalles réguliers après ledit démarrage, au moins une fois par an, de manière davantage préférée au moins une fois tous les 6 mois, de manière préférée entre toutes au moins une fois par mois.
